# DEMANDE DE BREVET EUROPEEN

(11) **EP 2 549 378 A1**
(43) Date de publication de la demande: **23.01.2013**
(21) Numéro de dépôt: 11174634.3
(22) Date de dépôt: 20.07.2011
(51) Int. Cl.: G06F 9/44, G06Q 10/00

(54) **Procédé de spécification d'un produit logiciel, et serveur mettant en oeuvre un tel procédé**

(71) Demandeur: 2Csi, 95001 Cergy Pontoise Cedex (FR)
(72) Inventeur: Commes, Jean Pierre, 95000 Cergy Pontoise (FR)
(74) Mandataire: Deschamps, Samuel

(57) **Abrégé**

La présente invention se rapporte à un procédé de spécification d'un produit logiciel, caractérisé en ce qu'il comporte les étapes suivantes :
• constitution d'un dossier de spécification décrivant le fonctionnement général du produit logiciel à spécifier et les interactions entre différentes fonctionnalités dudit produit logiciel en langage courant avec des schémas, les différentes fonctions dudit produit logiciel étant identifiées par des identifiants à destination d'un produit (ERP) ; et
• établissement d'une pluralité de documents de spécification dudit produit logiciel décrivant des sous-modules à destination de développeurs informatiques, ces documents présentant au moins une base de données, au moins une interface homme-machine et au moins un lien entre ladite base de données et ladite interface homme-machine, et décrivant des écrans et des actions de boutons et/ou de clics dans des champs.

La présente invention se rapporte également à un serveur pour la mise en oeuvre du procédé.

## Description

### Domaine de l'invention

La présente invention se rapporte au domaine de l'Informatique.

La présente invention concerne un procédé de spécification d'un produit logiciel, et un serveur mettant en oeuvre un tel procédé. Plus particulièrement, la présente invention a pour objet un procédé de mise en oeuvre d'une méthodologie de spécification d'un produit logiciel.

### Etat de la technique

Dans la description, on entend par logiciel une pluralité de sous-systèmes, de programmes ou de routines.

Une réalisation de produit logiciel comporte généralement cinq phases principales dont une phase d'analyse, une phase de conception, une phase de développement, une phase d'intégration et une phase de tests.

Dans la phase dite d'analyse, un responsable de projet chargé du développement du logiciel a pour rôle de définir des exigences et des champs d'application du produit logiciel en fonction des spécifications internes d'un client pour lequel il réalise le projet. Ce responsable de projet doit effectuer en outre une définition initiale des composants logiciels requis.

Lors de la phase de conception, le responsable du projet réalise une description du système global du logiciel. Dans la description du système global, les fonctionnalités du logiciel sont découpées en différents lots. Chaque lot fait l'objet d'une description spécifique dans un document autoporteur, autrement dit qui se suffit à lui-même. Chaque lot correspond à un module fonctionnel du logiciel, et chaque module du système global est distinct fonctionnellement des autres.

Le responsable du projet attribut un ou plusieurs modules à un chef de projet du module. Ce chef de projet du module a sous sa responsabilité plusieurs équipes de développement chapotées chacune par des chefs de développement.

Dans la phase de développement, chaque module est subdivisé en sous-module et chaque sous-module est réalisé par une équipe de développeurs, puis testé par l'équipe qui l'a développé lorsque celui-ci est terminé. Le fonctionnement de chaque sous-module est vérifié de façon indépendante par un test correspondant. Le chef de développement valide le fonctionnement du sous-module réalisé par son équipe, puis le livre au chef de projet du module. Le chef de projet du module se charge alors d'effectuer l'intégration de chaque sous-module avec respectivement les autres sous-modules, cela afin de réaliser un module complet. Un test fonctionnel est réalisé sur le module par le chef de projet. Lorsqu'un module a été validé, le chef de projet du module le transmet au responsable du projet afin que ce dernier l'intègre aux autres modules déjà validés du système global du logiciel. Le système global du logiciel est alors testé dans son ensemble pour déterminer si toutes les interactions entre les différents modules fonctionnent correctement.

Cependant, la réalisation d'un produit logiciel complexe nécessite une importante équipe de développement. Cette équipe de développement est dans la plupart des cas géographiquement dispersée. Du fait de cette dispersion, les modules créés par chaque équipe de développement ont des difficultés pour s'intégrer les uns aux autres pour former un système global complet. Cela est dû notamment au fait que chaque équipe utilise ses propres bibliothèques de données pour réaliser un ensemble de sous-modules. De ce fait, les différentes phases d'intégration dans le processus de développement du logiciel, ainsi que les tests de fonctionnalité effectués, engendrent un nombre considérable d'erreurs proportionnel à la complexité du logiciel. La recherche et la correction de ces erreurs ont notamment pour effet d'augmenter la durée de mise en oeuvre des phases d'intégration, et par voie de conséquence d'augmenter la durée totale de réalisation du produit logiciel.

### Exposé de l'invention

La présente invention entend remédier aux inconvénients de l'art antérieur en proposant un procédé de spécification d'un produit logiciel qui optimise le temps de préparation dudit produit logiciel, et le coût de développement dudit produit logiciel.

A cet effet, la présente invention concerne, dans son acception la plus générale, un procédé de spécification d'un produit logiciel, caractérisé en ce qu'il comporte les étapes suivantes :
- constitution d'un dossier de spécification décrivant le fonctionnement général du produit logiciel à spécifier et les interactions entre différentes fonctionnalités dudit produit logiciel en langage courant avec des schémas, les différentes fonctions dudit produit logiciel étant identifiées par des identifiants à destination d'un produit (ERP) ; et
- établissement d'une pluralité de documents de spécification dudit produit logiciel décrivant des sous-modules à destination de développeurs informatiques, ces documents présentant au moins une base de données, au moins une interface homme-machine et au moins un lien entre ladite base de données et ladite interface homme-machine, et décrivant des écrans et des actions de boutons et/ou de clics dans des champs.

Selon un mode de réalisation, ledit procédé comporte en outre une étape de transmission desdits documents de spécification dudit produit logiciel partiels à des développeurs informatiques.

Selon un mode de réalisation, ledit procédé comporte en outre une étape de transmission desdits documents de spécification dudit produit logiciel entiers à des développeurs informatiques.

De préférence, ledit procédé comporte en outre une étape d'écriture du code d'un écran et d'une dynamique associée à cet écran par au moins un développeur informatique.

Avantageusement, un document de spécification dudit produit logiciel contient la totalité des informations nécessaires pour un développement informatique.

Selon un mode de réalisation, un document de spécification dudit produit logiciel fait référence à des bibliothèques.

Selon un mode de réalisation, un document de spécification dudit produit logiciel fait référence à des documents décrivant un environnement de développement.

La présente invention se rapporte également à un serveur pour la mise en oeuvre du procédé.

La présente invention propose un procédé de spécification d'un produit logiciel permettant d'une part de mutualiser les ressources nécessaire à la réalisation du logiciel. Cette mutualisation des ressources permet de rendre accessible à l'ensemble des développeurs les mêmes bibliothèques de données afin de réaliser les différentes interfaces des différents modules ou sous-modules qu'ils sont amenés à réaliser.

L'invention permet également une automatisation des phases d'intégration que cela soit pour une ou plusieurs interfaces ou, pour un ou plusieurs modules ou sous-modules. Cette automatisation de la phase d'intégration, permet de réduire considérablement la durée de mise en oeuvre de cette phase et surtout la durée totale de réalisation du produit logiciel.

Dans le procédé selon la présente invention, on ne laisse pas de liberté aux développeurs informatiques dans les documents de spécification du produit logiciel. De plus, le découpage en sous-modules permet d'améliorer l'homogénéité du programme : les chefs de projets font les écrans. Ces derniers ont tous la même forme et la même structure. Le procédé selon la présente invention permet également d'améliorer la phase de développement. On ramène le temps de développement à 30 % du temps total au lieu de 50 à 60 %. On gagne beaucoup sur la phase de développement, et globalement, le projet est moins coûteux.

Le découpage et la description physique font que le développeur n'a pas de liberté pour développer son code. Le document de spécification du produit logiciel est auto-porteur : il contient la totalité des informations pour le développement. On peut également faire une intégration de plusieurs modules, sans que la totalité des modules ait été développée. On peut donner des sous-modules à des développeurs différents, mais qui ne pourront faire l'intégration. On maîtrise ainsi l'intégration car les sous-traitants n'ont jamais de vue globale de la fonction.

L'invention permet en outre lorsque les développeurs sont géographiquement dispersés d'éviter toute contrefaçon du logiciel en faisant en sorte qu'un développeur n'ait accès qu'aux informations lui permettant de réaliser son interface ou son sous-module. Ainsi, le développeur ne peut connaître le système global du produit logiciel dans son ensemble.

### Brève description des dessins

On comprendra mieux l'invention à l'aide de la description, faite ci-après à titre purement explicatif, d'un mode de réalisation de l'invention, en référence aux Figures dans lesquelles :
- la Figure 1 est une représentation schématique du système selon un mode de réalisation de l'invention ; et
- la Figure 2 est un diagramme du procédé selon l'invention.

### Description détaillée des modes de réalisation de l'invention

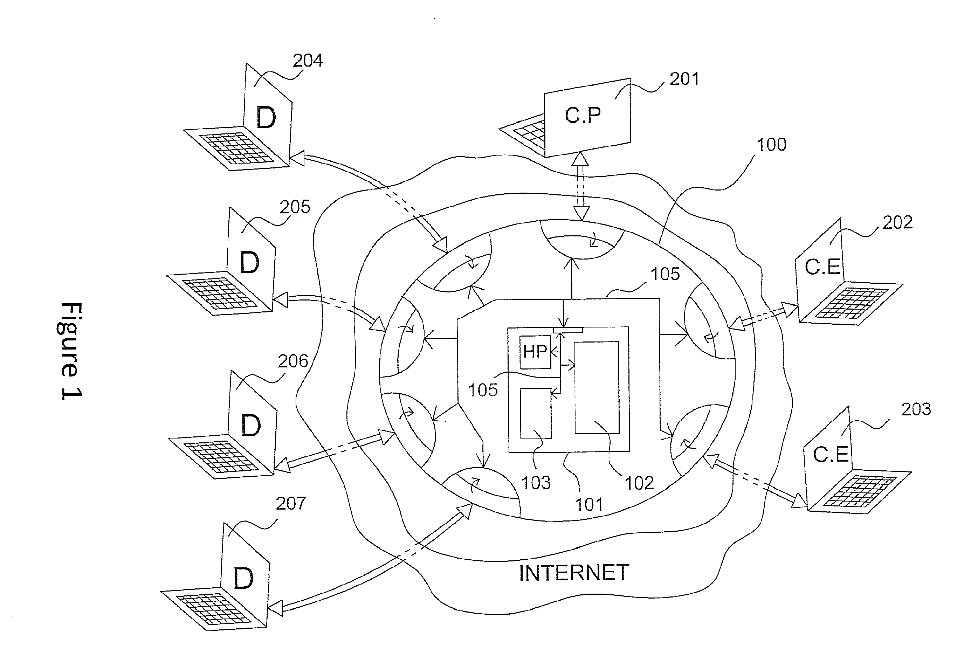

Selon un mode de réalisation de l'invention, illustré à la Figure 1, un serveur 100 comporte de manière non exhaustive une unité de commande 101 connue de l'état de la technique. Cette unité de commande 101 comporte une mémoire programme 102 et une mémoire de données 103 connectées à un ou plusieurs microprocesseur(s) 104 via un ensemble de bus de communication 105.

Les actions menées par l'unité de commande 101 sont ordonnées par le microprocesseur 104. Le microprocesseur 104 produit, en réponse aux codes instructions enregistrés dans la mémoire programme 102, des ordres destinés à permettre la mise en oeuvre d'un procédé de développement de produit logiciel.

Pour la réalisation d'un produit logiciel complexe, ledit logiciel est développé par des équipes nombreuses qui sont souvent géographiquement dispersées. L'invention prévoit à cet effet que chaque participant au projet de développement d'un produit logiciel, autrement dit, un responsable projet, un chef de projet, un chef de développement et les équipes de développeurs, disposent respectivement de terminaux 201, 202, 203, 204, 205, 206, 207. Un tel terminal permet à chaque participant du projet de se connecter via le réseau Internet à une session de travail virtuelle hébergée sur le serveur 101.

Chaque session de travail virtuelle est accessible via un identifiant et un mot de passe. Chaque identifiant associé à son mot de passe correspondant, permet d'accéder ou non à un ensemble de droits d'utilisation d'applications installées sur le serveur, mais aussi d'accéder à différentes zones sécurisées ou non dudit serveur.

Ainsi, chaque session attribue à chaque utilisateur identifié sur le serveur, un espace de travail avec un ensemble d'applications principalement liées au développement. Dans le cadre du développement du produit logiciel, le serveur permet via les sessions virtuelles, une uniformité au niveau des applications utilisées par chaque utilisateur.

Au début du processus de développement, une phase préliminaire dite d'analyse, permet de mettre en place un cahier des charges en effectuant premièrement une description du besoin initial, autrement dit déterminer le but d'un tel logiciel, son application, la description des besoins du client, les contraintes rencontrées par le client, ainsi que la date de livraison butoir. Deuxièmement, il est nécessaire de déterminer le nom du produit logiciel, les contraintes matérielles, d'effectuer la description détaillée de chaque interface du logiciel et un planning de développement. Troisièmement, il est également nécessaire d'élaborer des plans de test de validation dudit logiciel.

Une phase dite de conception, permet une modélisation du logiciel en le découpant en plusieurs modules fonctionnels. Les modules fonctionnels sont alors à leur tour découpés en sous-modules fonctionnels et ainsi de suite jusqu'à arriver à la description du plus petit module unitaire possible. Cette phase de conception est essentielle pour la suite de la réalisation du logiciel. En effet, l'invention prévoit que le serveur alloue à chaque interface, du système global de modules du logiciel, un espace mémoire. Cet espace mémoire dédié à chaque interface n'est accessible que par le développeur qui doit la réaliser.

Le chef de projet se charge également de définir une bibliothèque de règles de nommage, une bibliothèque numérique de règles de classe de données, une bibliothèque numérique de méthode, et une bibliothèque numérique de table, telles que des journaux d'historique, des langues, des libellés des termes avec des champs qu'il a lui-même préalablement remplies. L'ensemble de ces bibliothèques numériques est enregistrée également dans la mémoire de données 103.

La phase de conception aboutit par la réalisation d'un ensemble de documents dont un document de spécification et de conception du système, ainsi qu'un document descriptif de chaque module. Dans ce document descriptif de module, est décrit toutes les interfaces homme/machine graphiques du logiciel associées au module, ainsi que leurs liaisons avec la ou les interface(s) suivante(s) et/ou précédente(s).

Chaque développeur reçoit de la part de son chef de développement au moins un document descriptif de module qui lui est attribué. Le document descriptif de module se suffit à lui-même dans le sens que les connaissances qui y sont inscrites permettent la réalisation d'un module dans son ensemble et en toute autonomie.

La phase de conception permet également d'élaborer les plans de tests unitaires et d'intégrations.

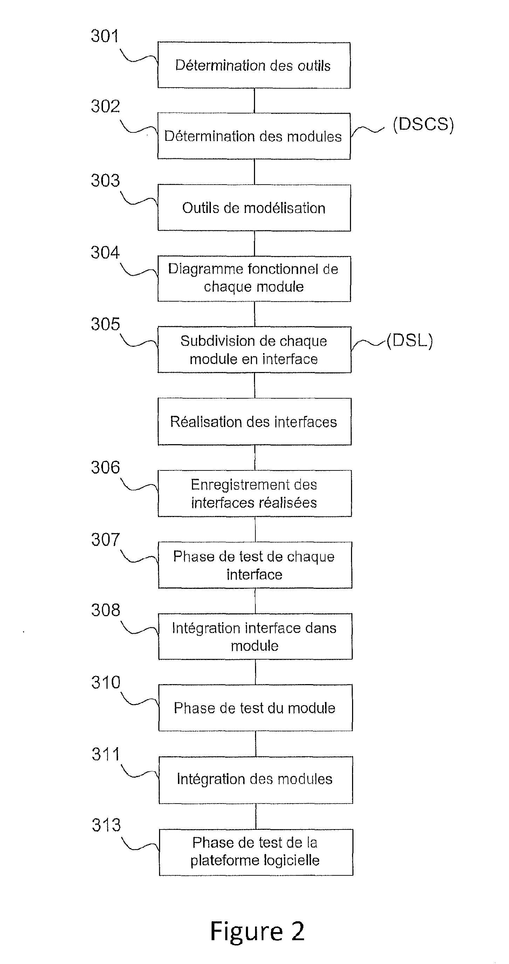

La Figure 2 est un diagramme fonctionnel du procédé de spécification d'un produit logiciel, mis en oeuvre par le serveur selon un mode de réalisation de l'invention.

A une étape 301 préliminaire, l'unité de commande 101 détermine en fonction des données qui lui sont transmises, des outils de développement commun à tous les utilisateurs. Ces outils de développement répertorient dans la mémoire de données les règles de nommage, les règles de droit, la bibliothèque de classes, la création des tables, et la bibliothèque de méthode.

A une étape 302, l'unité de commande 101 génère un ensemble d'espace de travail alloué à chaque module. L'unité de commande 101 affecte également un nom à chaque espace de travail alloué à un module.

A une étape 303, l'unité de commande 101 détermine les outils de modélisation, notamment l'affectation des tables, des champs et liens entre les tables.

A une étape 304, l'unité de commande 101 affecte à chaque développeur l'espace qui lui est alloué pour réaliser son module.

A une étape 305, l'unité de commande 101 met à la disposition du développeur dans l'espace de travail associé à sa session virtuelle, des ressources. Ces ressources sont de manière non exhaustive des applications permettant la programmation ainsi que la mise à disposition des tables et des liens pour déterminer si le développeur respecte les classes et tables prédéfinies. Ces ressources sont configurées de sorte à permettre au développeur de réaliser les interfaces de modules qu'on lui a attribuées. Ces différentes ressources prédéfinies dont a accès le développeur sont consultables mais non modifiables par ce dernier.

A une étape 306, lorsqu'un développeur a terminé la réalisation d'une interface, l'unité de commande enregistre automatiquement l'interface, appelé encore composant, dans l'espace de travail qui lui est alloué permettant ainsi au chef de développement puis par la suite au chef de projet d'intervenir.

A une étape 307, l'unité de commande 101 effectue un test unitaire sur l'interface réalisée sauvegardée. Ce test unitaire est réalisé au moyen des plans de tests préalablement injectés dans l'unité de commande. Lorsque la phase de test unitaire de l'interface est terminée, l'unité de commande exécute une étape 308, dans laquelle il intègre l'interface ou composant dans le module associé, en fonction d'une bibliothèque d'indexation d'interfaces prédéfinies.

A une étape 309, lorsque chacune des interfaces d'un même module ont été testées puis intégrées, l'unité de commande 101 exécute une étape 310 dans laquelle il effectue un test du module dans son ensemble pour le valider.

A une étape 311, lorsqu'un module est validé, l'unité de commande procède à une phase d'intégration dudit module dans le système global du produit logiciel, en fonction de la bibliothèque d'arborescence des modules en fonction de leurs entrées et de leurs sorties.

A une étape 312, l'unité de commande détermine si tous les modules ont été réalisés, testés, et intégrés au système global.

A une étape 313, lorsque tous les modules ont été réalisés, testés, et intégrés au système global, alors l'unité de commande effectue une phase de test du système global du produit logiciel dans son ensemble.

A titre d'exemple, une table des matières d'un document de spécification dudit produit logiciel est décrite ci-dessous :

| | | |
|---|---|---|
| | | _Toc291072081 |
| **1** | | **DESCRIPTION** |
| **2** | | **SCHEMA DES DONNEES** |
| **3** | | **LISTE DES CLASSES METIERS ET DONNEES** |
| **4** | | **LES ENUMERATIONS** |
| **5** | | **LES DROITS SPECIFIQUES DE L'UTILISATEUR** |
| **6** | | **REGLES DE GESTION** |
| **7** | | **IHM1-** |
| | 7.1 | DESCRIPTION |
| | 7.2 | ACCES A L'ECRAN |
| | 7.3 | DEFINITION DES ZONES |
| | 7.4 | DYNAMIQUE DE L'ECRAN |
| | 7.5 | REGLES D'AFFICHAGE |
| | 7.6 | METHODES IHM |
| | 7.7 | METHODES METIER - DONNEES |
| **8** | | **IHM2 -** |
| | 8.1 | DESCRIPTION |
| | 8.2 | ACCES A L'ECRAN |
| | 8.3 | DEFINITION DES ZONES |
| | 8.4 | DYNAMIQUE DE L'ECRAN |
| | 8.5 | REGLES D'AFFICHAGE |
| | 8.6 | METHODES IHM |
| | 8.7 | METHODES METIER - DONNEES |
| **9** | | **IHM3 -** |
| | 9.1 | DESCRIPTION |
| | 9.2 | ACCES A L'ECRAN |
| | 9.3 | DEFINITION DES ZONES |
| | 9.4 | DYNAMIQUE DE L'ECRAN |
| | 9.5 | REGLES D'AFFICHAGE |
| | 9.6 | METHODES IHM |
| | 9.7 | METHODES METIER - DONNEES |

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé de spécification d'un produit logiciel, **caractérisé en ce qu'**il comporte les étapes suivantes :
• constitution d'un dossier de spécification décrivant le fonctionnement général du produit logiciel à spécifier et les interactions entre différentes fonctionnalités dudit produit logiciel en langage courant avec des schémas, les différentes fonctions dudit produit logiciel étant identifiées par des identifiants à destination d'un produit (ERP) ; et
• établissement d'une pluralité de documents de spécification dudit produit logiciel décrivant des sous-modules à destination de développeurs informatiques, ces documents présentant au moins une base de données, au moins une interface homme-machine et au moins un lien entre ladite base de données et ladite interface homme-machine, et décrivant des écrans et des actions de boutons et/ou de clics dans des champs.

2. Procédé selon la revendication 1, **caractérisé en ce qu'**il comporte en outre une étape de transmission desdits documents de spécification dudit produit logiciel partiels à des développeurs informatiques.

3. Procédé selon la revendication 1, **caractérisé en ce qu'**il comporte en outre une étape de transmission desdits documents de spécification dudit produit logiciel entiers à des développeurs informatiques.

4. Procédé selon la revendication 2 ou 3, **caractérisé en ce qu'**il comporte en outre une étape d'écriture du code d'un écran et d'une dynamique associée à cet écran par au moins un développeur informatique.

5. Procédé selon l'une des revendications précédentes, **caractérisé en ce qu'**un document de spécification dudit produit logiciel contient la totalité des informations nécessaires pour un développement informatique.

6. Procédé selon l'une des revendications précédentes, **caractérisé en ce qu'**un document de spécification dudit produit logiciel fait référence à des bibliothèques.

7. Procédé selon l'une des revendications précédentes, **caractérisé en ce qu'**un document de spécification dudit produit logiciel fait référence à des documents décrivant un environnement de développement.

8. Serveur pour la mise en oeuvre du procédé selon l'une au moins des revendications 1 à 7.
